# EUROPÄISCHE PATENTSCHRIFT

(11) **EP 1 614 396 B1**
(45) Veröffentlichungstag und Bekanntmachung des Hinweises auf die Patenterteilung: **10.03.2010**
(21) Anmeldenummer: 05106162.0
(22) Anmeldetag: 07.07.2005
(51) Int. Cl.: A61C 13/00

(54) **Verfahren zur Herstellung eines dentalen Zahnersatzteils**
Method of producing dental prostheses
Procedé pour fabriquer des prothèses dentaires

(30) Priorität: 08.07.2004 DE 102004033248
(43) Veröffentlichungstag der Anmeldung: 11.01.2006
(73) Patentinhaber: Sirona Dental Systems GmbH, 64625 Bensheim (DE)
(72) Erfinder: Orth, Ulrich, 64686, Lautertal (DE); Wedler, Volker, 69493, Hirschberg (DE)
(74) Vertreter: Sommer, Peter

(56) Entgegenhaltungen:
- EP-A- 0 850 601
- WO-A-02/09612
- DE-A1- 19 944 130
- US-A- 5 151 044

## Beschreibung

### Technisches Gebiet

Die Erfindung betrifft ein Verfahren zur Erzeugung eines Bearbeitungsplans für eine Bearbeitungsmaschine nach CAD/CAM-Prinzipien zur Herstellung eines dentalen Zahnersatzteils aus einem Rohling.

### Stand der Technik

Ein entsprechendes Verfahren ist aus der WO-A-02/09612 bekannt.

Im Stand der Technik ist bekannt, Zahnersatzteile aus dentalkeramischen Rohlingen herauszuarbeiten. Dies geschieht entweder im Wege eines Kopierschleifens ausgehend von einem positiven Modell oder im Wege einer Vermessung eines Modells oder im Wege einer direkten Vermessung eines Zahnes und Erzeugen eines digitalen Datensatzes mit anschließender Konstruktion des Zahnersatzteils und Herstellung unter Verwendung bekannter CAD/CAM-Methoden.

Das herzustellende Zahnersatzteil wird dabei in Abhängigkeit von dem zu bearbeitenden Rohling so in diesen Rohling eingebettet, dass hinreichende Sicherheitsabstände zu den Grenzen des Rohlings eingehalten werden. Darüber hinaus kann das Zahnersatzteil automatisch bei der Berechnung des Bearbeitungsplans der Bearbeitungsmaschine innerhalb des Rohlings so positioniert werden, dass das zu bearbeitende Volumen gegenüber einer rein mittigen Anordnung verringert ist. Dies geschieht automatisch und ohne Eingriffsmöglichkeit durch den Benutzer.

Die Aufgabe der Erfindung besteht darin, eine größere Freiheit bei der Konstruktion des Zahnersatzteils bereit zu stellen.

### Offenbarung der Erfindung

Das erfindungsgemäße Verfahren zur Herstellung eines dentalen Zahnersatzteils aus einem Rohling unter Erzeugung eines Bearbeitungsplans einer Bearbeitungsmaschine ist so ausgestaltet, dass der Rohling mindestens zwei Bereiche mit unterschiedlichen Eigenschaften aufweist, dass die Bereiche voneinander abgesetzt zusammen mit einer Wiedergabe des Zahnersatzteils dargestellt sind, dass zur Anordnung des aus dem Rohling herauszuarbeitenden Zahnersatzteils im Rohling über Eingabemittel die Lage der Wiedergabe des Zahnersatzteils im Rohling bezüglich der Bereiche veränderbar ist, dass der Bearbeitungsplan unter Berücksichtigung der Lage der Wiedergabe des Zahnersatzteils angepasst oder erstellt wird und dass der Rohling und das Zahnersatzteil in einer dreidimensionalen Zentral perspektive dargestellt sind, wobei der Rohling durch seine Außenflächen begrenzt und halbtransparent dargestellt ist.

Dies hat den Vorteil, dass eine optische Kontrolle der Lage möglich ist und dass die Eigenschaften des Zahnersatzteils beeinflusst werden können entsprechend der Ausgestaltung des Rohlings.

Durch die 3D-Darstellung wird ein besonders plastischer Eindruck hervorgerufen.

Die Veränderung der Lage kann anstelle oder zusätzlich zu einer Verschiebung auch durch Veränderung der Drehlage der Wiedergabe des Zahnersatzteils im Rohling bewirkt werden.

Aufgrund von Informationen aus einem Objekt, in welches das dentale Zahnersatzteil eingebracht werden soll, kann auch eine automatische Positionierung der Wiedergabe des Zahnersatzteils im Rohling vorgenommen werden. Dieser Vorschlag kann dann angezeigt werden und die Lage kann angepasst werden, oder es kann vorgesehen sein, dass die Lage dann nicht mehr verändert werden kann.

Vorteilhafterweise sind von den Bereichen zumindest die aneinanderstoßenden Grenzen dargestellt. Dadurch ist es möglich, die Aufteilung des Zahnersatzteils auf die Bereiche zu erkennen.

Wenn die Wiedergabe des Zahnersatzteil in einem Teilbereich, der in einem ersten Bereich des Rohlings liegt, abgesetzt gegenüber dem Teilbereich, der in einem zweiten Bereich des Rohlings liegt, dargestellt ist, hat dies den Vorteil, dass auch das Zahnersatzteil in seinen Eigenschaften leicht erfassbar ist und geprüft werden kann, ob die Grenzbereiche wie erforderlich verlaufen.

Wenn die Lageänderung des Zahnersatzteils durch die Außenabmessungen des Rohlings begrenzt ist, wird sichergestellt, dass das Zahnersatzteil in den gewünschten Konturen herausarbeitbar ist.

Wenn die Lageänderung des Zahnersatzteils durch herstellungsbedingte Fertigungsparameter, insbesondere den maximalen Vorschubweg des Werkzeugs begrenzt ist, ist weiterhin sichergestellt, dass das Zahnersatzteil keine ungewollt unbearbeiteten Bereiche aufweist.

Gemäß einer Weiterbildung wird eine Farbmessung im Restaurationsfeld des herzustellenden Zahnersatzteils durchgeführt und anhand dieser Farbmessung wird aus einer Vielzahl unterschiedlicher Rohlinge eine automatische Vorauswahl eines Bereiche unterschiedlicher Farbe aufweisenden Rohlings getroffen. Diese Farbmessung kann z.B. durch eine Messung der Helligkeit oder von Farbwerten von Zahnbereichen in digitalen Fotoaufnahmen geschehen, die z.B. mit einer herkömmlichen Intraoralkamera gemacht wurden. Zur genauen Lokalisierung dieser Bereiche in den digitalen Fotoaufnahmen kann der Benutzer z.B. durch Anklicken oder das Zeichnen einer umschreibenden Linie diese Bereiche markieren.

Vorteilhafterweise erfolgt anhand der Farbmessung automatisch eine Positionierung der Wiedergabe des Zahnersatzteils innerhalb des Bereiche unterschiedlicher Farbe aufweisenden Rohlings. Durch einen Vergleich der gemessenen Helligkeiten oder Farben in den Originalzähnen mit den entsprechenden Helligkeiten oder Farben, die in einer datenmäßigen Beschreibung des Rohlings vorliegen, kann eine Minimierung der Abweichungen in Helligkeit bzw. Farbe erfolgen. Grundsätzlich können auch andere Informationen außer der Farbe, z.B. die Restaurationsform bei Rohlingen mit verschiedenen Festigkeiten, für eine automatische Vorauswahl verwendet werden.

Vorteilhafterweise ist die Lage der Wiedergabe des Zahnersatzteils gleichwohl nachträglich veränderbar, um ausgehend von der Voreinstellung Anpassungen manuell vorzunehmen.

Die mögliche Verschiebung des Zahnersatzteils innerhalb des Rohlings kann abhängig sein von der Anordnung der Bereiche mit unterschiedlichen Eigenschaften innerhalb des Rohlings. Damit ist die Richtung der Veränderung der Lage vorgebbar.

Gemäß einer Weiterbildung sind die Eigenschaften der Bereiche ausgewählt aus der Farbe, der Festigkeit, der Materialdichte, der Transluzenz oder der Porosität oder einer Kombination mehrerer davon. Auf diese Weise ist es möglich, bestimmte Eigenschaften in bestimmten Teilbereichen des Zahnersatzteils bereitzustellen. Alle diese Eigenschaften können für eine automatische Vorauswahl verwendet werden.

Vorteilhafterweise erfolgt eine voreingestellte Darstellung eines herzustellenden Zahnersatzteils im Frontzahnbereich aus labialer Richtung und bei den übrigen Zähnen aus bukkaler Richtung.

Ein weiterer Gegenstand, welcher nicht Teil der Erfindung ist, betrifft eine Vorrichtung zur Herstellung eines dentalen Zahnersatzteils aus einem Rohling unter Erzeugung eines Bearbeitungsplans einer Bearbeitungsmaschine. Der zu bearbeitende Rohling weist mindestens zwei Bereiche mit unterschiedlichen Eigenschaften auf und es sind Mittel zur Darstellung der Bereiche zusammen mit einer Wiedergabe des Zahnersatzteils vorgesehen, wobei die Wiedergabe insbesondere als Schema, als Kontur, als Schnittmodell, als Teil einer Oberfläche, als Seitenansicht oder als Schattenriss ausgebildet ist. Weiterhin sind Eingabemittel vorgesehen, mit denen die Lage der Wiedergabe des Zahnersatzteils im Rohling bezüglich der Bereiche veränderbar ist und es sind Mittel zur Anpassung oder Erstellung des Bearbeitungsplans unter Berücksichtigung der Lage der Wiedergabe des Zahnersatzteils vorhanden.

### Kurze Beschreibung der Zeichnungen

Das erfindungsgemäße Verfahren wird anhand der Zeichnung erläutert. Es zeigen:
- Fig. 1: eine Darstellung eines dreischichtigen Rohlings mit aus dem Rohling herauszuarbeitenden einem Zahnersatzteil in einer mittigen Lage, die
- Fig. 2: den Rohling aus Fig. 1 mit einem in eine Richtung verschobenen Zahnersatzteil, die
- Fig. 3: den Rohling aus Fig. 1 und 2 mit einem in eine der Fig. 2 entgegengesetzten Richtung verschobenen Zahnersatzteil, die
- Fig. 4: den Rohling aus Fig. 1 mit einem Zahnersatzteil für den Frontzahnbereich, die
- Fig. 5: eine nicht die Erfindung betreffende Vorrichtung mit den wesentlichen Bauteilen, die
- Fig. 6: einen auf einem Halter befestigten mehrschichtigen Rohling und die
- Fig. 7a-c: eine Berücksichtigung eines Farbprofils bei der Auswahl des Rohlings und der Anordnung des Zahnersatzteils.

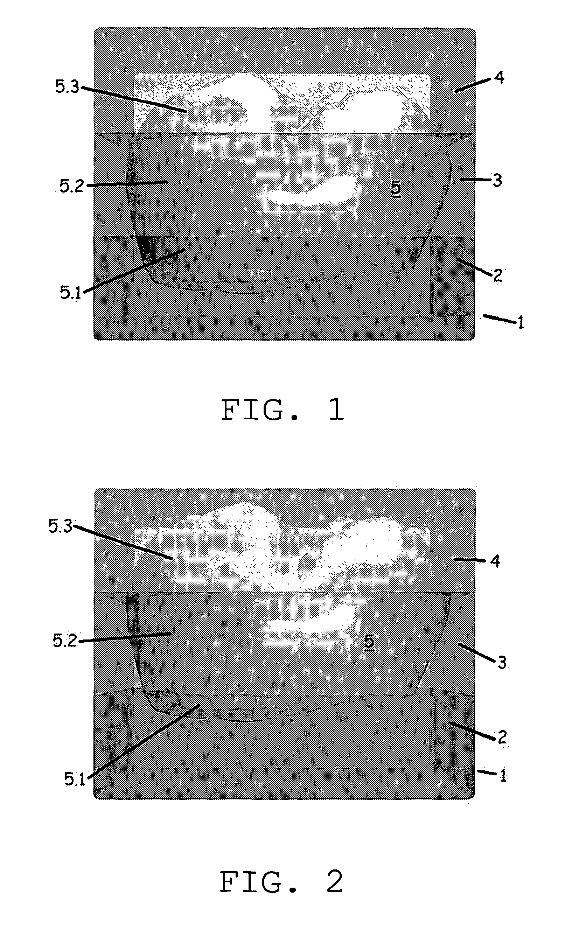

In Fig. 1 ist die Außenkontur eines Rohlings 1 mit drei unterschiedlich eingefärbten halbtransparenten Bereichen 2, 3, 4 in zentralperspektivischer Darstellung gezeigt. Dabei ist beispielsweise zwischen den Bereichen 3 und 4 eine Grenzfläche zu erkennen.

Innerhalb des Rohlings 1 ist ein Zahnersatzteil 5 eines Backenzahns angeordnet, welches aus bukkaler Richtung gesehen gezeigt ist. Das Zahnersatzteil 5 ist dabei als 3D-Oberflächenmodell so dargestellt, dass erkennbar ist, in welchem Bereich 2 bis 4 des Rohlings 1 Teilbereiche 5.1 bis 5.3 das Zahnersatzteil zu liegen kommen. Im Ausführungsbeispiel ist der Bereich 2 dunkler als der Bereich 3 und dieser wiederum dunkler als der Bereich 4 dargestellt, so dass auch das Zahnersatzteil in dem Teilbereich 5.1 dunkler als in dem Teilbereich 5.2 bzw. dem Teilbereich 5.3 dargestellt ist.

Die Farbdarstellung der Bereiche 2 bis 4 beziehungsweise Teilbereich 5.1 bis 5.3 liefert eine Information über den Verlauf der Bereichsgrenzen am Zahnersatzteil 5, beispielsweise um einen Rohling mit unterschiedlich eingefärbten Bereichen darzustellen oder aber unterschiedliche Materialeigenschaften wie beispielsweise Festigkeit darzustellen.

Es ist nicht erforderlich, dass die zur Anzeige gebrachte Darstellung ein realistisches Bild mit realistischen Farben wiedergibt, da menschliches Gewebe nur in sehr aufwendigen graphischen Mustern darstellbar ist. Hier steht jedoch die Information über die Lage des Zahnersatzteils innerhalb des Rohlings im Vordergrund und nicht die resultierende naturgetreue Wiedergabe des Farbverlaufs.

In Fig. 2 ist dargestellt, wie das Zahnersatzteil 5 innerhalb des Rohlings in dem Bereich 4 hinein verschoben wurde, so dass der Teilbereich 5.3 vergrößert wurde und der Teilbereich 5.1 verkleinert wurde. Die Bereichsgrenze zwischen den Bereichen 3 und 4 rückt damit am Zahnersatzteil 5 weiter nach unten. Eine Grenze für die Verschiebung stellt die Außengrenze des Rohlings 1 dar, wobei ein Sicherheitsabstand eingehalten ist.

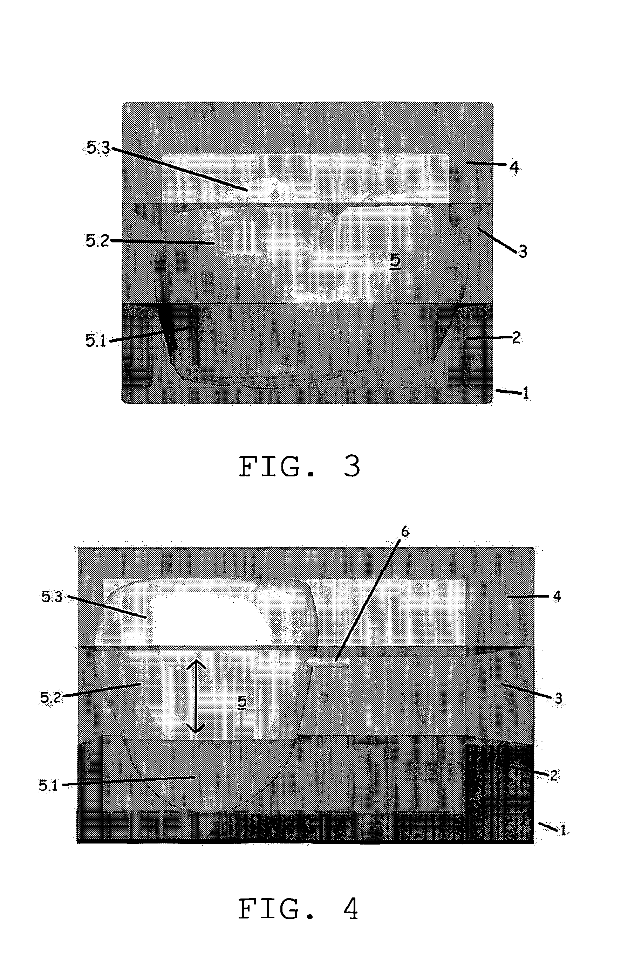

In Fig. 3 ist das Zahnersatzteil 5 so innerhalb des Rohlings 1 verschoben, dass im Bereich 4 kein Teilbereich des Zahnersatzteils 5 mehr liegt, sondern dass das Zahnersatzteil 5 mit seinen Teilbereichen 5.2., 5.1 ausschließlich in den Bereichen 2, 3 liegt. Dabei wurde darauf geachtet, dass die Außenkontur des Rohlings 1 auch nach unten hin nicht verlassen wurde.

Werden gleichwohl Eingaben zur weiteren Verschiebung in diese Richtung vorgenommen, werden diese ignoriert und es wird eine Warnmeldung ausgegeben. Dies gilt auch dann, wenn der Bearbeitungsbereich des Werkzeugs verlassen wird, so dass stets sichergestellt ist, dass das Zahnersatzteil hergestellt werden kann

In Fig. 4 ist die Wiedergabe des Zahnersatzteils 5 eines Frontzahns, aus labialer Richtung gesehen, dargestellt. Das Zahnersatzteil 5 erstreckt sich über die Bereiche 2, 3, 4 und lässt sich in Pfeilrichtung nach oben bzw. nach unten verschieben. Dadurch verändert sich das Verhältnis der Teilbereiche 5.1, 5.2, 5.3 zueinander.

An dem Zahnersatzteil 5 ist ein Verbindungsteil 6 vorgesehen, das die Verbindung des aus dem Rohling 1 herausgearbeiteten Zahnersatzteils mit einem Restbereich des Rohling darstellt. Dieses Verbindungsteil 6 ist entlang des Zahnersatzteils 5 innerhalb gewisser Grenzen der Bearbeitungsmöglichkeit frei verschiebbar. Der Bearbeitungsplan wird sowohl an die geänderte Lage des Zahnersatzteils 5 im Rohling 1 als auch an die geänderte Lage des Verbindungsteils 6 angepasst. Entsprechendes gilt auch für das Zahnersatzteil an den Fig. 1 bis 4.

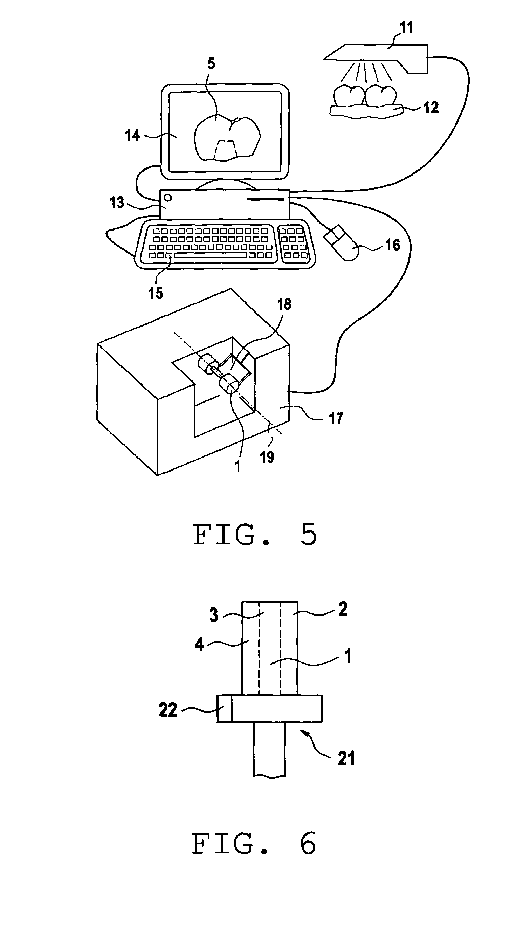

In Fig. 5 ist ein schematischer Aufbau einer Vorrichtung zur Durchführung des Verfahrens nach CAD/CAM-Prinzipien dargestellt. Mittels einer Vermessungseinrichtung 11 wird ein Modell 12 eines dentalen Restaurationsgebiets vermessen und anhand der Messdaten wird ein dreidimensionaler Datensatz des herzustellenden Zahnersatzteils 5 konstruiert. Dies geschieht auf einem Rechner 13, der eine Anzeigeeinheit 14 sowie Eingabemittel in Form einer Tastatur 15 oder einer Maus 16 aufweist. Auch andere Eingabemittel wie ein graphischen Tablett können für die Durchführung der Konstruktion verwendet werden. Zusätzlich kann eine Kamera für die Farbmessung der Präparationsstelle vorgesehen sein.

Das auf der Anzeigeeinheit 14 konstruierte Zahnersatzteil 5 wird in einer Bearbeitungseinheit 17 aus einem Rohling 1 hergestellt, in dem ein Bearbeitungswerkzeug 18 Material vom Rohling 1 entfernt.

Zur Durchführung des Verfahrens ist es erforderlich, dass die Lage des Rohlings 1 bezüglich einer Bearbeitungsachse 19 der Bearbeitungsmaschine 17 bekannt ist, falls der Rohling während der Bearbeitung um diese Achse gedreht wird. Ist dies nicht der Fall, ist es ausreichend, die relative Lage des Rohlings 1 bezüglich des Werkzeugs 18 zu kennen.

Der Vorschubweg des Bearbeitungswerkzeugs 18 ist naturgemäß begrenzt, so dass nur ein gewisser Bearbeitungsraum zur Verfügung steht. Sowohl dieser Bearbeitungsraum als auch die Außengrenze des Rohlings 1 selbst ist bei der Festlegung des Bearbeitungsplans zur Herstellung des Zahnersatzteils aus dem Rohling zu berücksichtigen.

In Fig. 6 ist ein auf einem Halter 21 befestigter Rohling 1 dargestellt, der mit dem Halter 21 in die Bearbeitungsmaschine 17 eingespannt und über eine Zentrieröffnung 22 positioniert ist. Die Lage des Rohlings auf dem Halter ist innerhalb gewisser Toleranzen bekannt, ebenso die Lage des Rohlings innerhalb der Bearbeitungsmaschine 17. Auch die Lage des Bearbeitungswerkzeugs 18 ist bezogen auf den Rohling 1 bekannt, so dass die Bereiche 2, 3, 4 in ihrer Zuordnung zueinander und innerhalb des Rohlings 5 ebenfalls bekannt sind.

Bei dem in den Fig. 1 bis 4 dargestellten geschichteten Rohling ist eine Verschiebung in der Richtung der Schichtung vorgesehen. Bei Rohlingen, welche eine komplexere Geometrie der einzelnen Bereiche aufweisen, können auch andere Richtungen der Verschiebung vorgesehen sein bis hin zu den ins gesamt sechs Freiheitsgraden der Verschiebung bzw. Drehung (Rotation).

Die Darstellung erfolgt in der Praxis als stilisierte Farbdarstellung mit Farbgrenzen, wobei ohne weiteres auch eine schwarz/weiß Darstellung für die Visualisierung ausreichen ist.

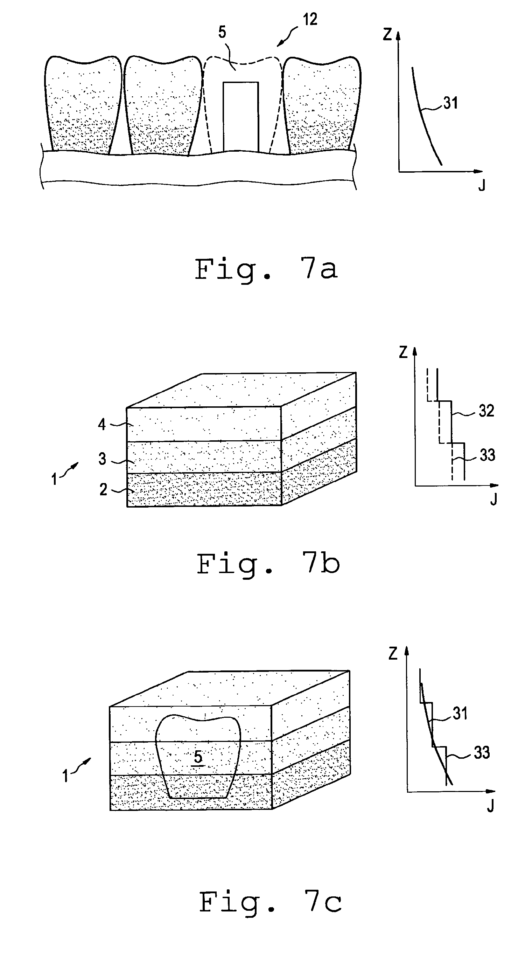

Für die Visualisierung müssen die Blockgrenzen darüber hinaus nicht zwingend sichtbar sein, es ist jedoch für die Darstellung der Grenzen der Verschiebung hilfreich. In Fig. 7a ist die Präparationsstelle 12 im Frontzahnbereich im Detail dargestellt, wobei das zu erstellende Zahnersatzteil 5 zwischen zwei vorhandenen Nachbarzähne bezüglich der Form und der Farbe eingepasst werden soll. Dazu wird die Präparationsstelle 12 zur Erzeugung eines 3D-Datensatzes vermessen und das Farbprofil 31 der Nachbarzähne werden ermittelt. Das Farbprofil ist angegeben in einem Koordinatensystem mit einer Höhenkoordinate Z und einem Farbintensitätswert I.

In Fig. 7b ist der Rohling 1 mit den drei aufeinandergeschichteten Bereichen 2, 3, 4 dargestellt. In dem Koordinatensystem mit dem Farbintensitätsverlauf sind zwei Kurven 32, 33 für zwei unterschiedliche Rohlinge dargestellt. Selbstverständlich sind auch andere Verläufe denkbar, beispielsweise die Kombination eines sehr hellen Bereichs 4 mit einem sehr dunkler Bereich 2.

In Fig. 7c ist anhand des Diagramms über den Farbintensitätsverlauf gezeigt, wie der gemessene Intensitätsverlauf im Bereich der Präparationsstelle mit dem Farbintensitätsverlauf 33 eines nicht dargestellten Rohlings verglichen wird. Hierfür eignen sich aus der Statistik bekannte Verfahren, beispielsweise das Verfahren der Minimierung des Quadrats der Abweichungen.

Zusätzlich zu der Auswahl des Rohlings mit dem am besten korrespondierenden Farbintensitätsverlauf erfolgt eine automatische Platzierung des Zahnersatzteils 5 innerhalb des Rohlings 1 unter Berücksichtigung der Außengrenzen des Rohlings.

Anstelle oder zusätzlich zu den Farbintensitätswerten können auch Verläufe der Transluzenz, Materialfestigkeit, Porosität oder anderes verwendet werden.

## Patentansprüche

1. Verfahren zur Erzeugung eines Bearbeitungsplans für eine Bearbeitungsmaschine nach CAD/CAM-Prinzipien zur Herstellung eines dentalen Zahnersatzteils (5) aus einem Rohling (1), wobei
- der Rohling mindestens zwei Bereiche (2, 3, 4) mit unterschiedlichen Eigenschaften aufweist, wobei
- die Bereiche (2, 3, 4) voneinander abgesetzt zusammen mit einer Wiedergabe des Zahnersatzteils (5) dargestellt sind, wobei
- zur Anordnung des aus dem Rohling herauszuarbeitenden Zahnersatzteils (5) im Rohling (1) über Eingabemittel (15) die Lage der Wiedergabe des Zahnersatzteils im Rohling (1) bezüglich der Bereiche veränderbar ist und wobei
- der Bearbeitungsplan unter Berücksichtigung der Lage der Wiedergabe des Zahnersatzteils (5) angepasst oder erstellt wird,
- **dadurch gekennzeichnet, dass** der Rohling (1) und das Zahnersatzteil (5) in einer dreidimensionalen Zentralperspektive dargestellt sind, wobei der Rohling (1) durch seine Außenflächen begrenzt und halbtransparent dargestellt ist.

2. Verfahren nach Anspruch 1, **dadurch gekennzeichnet, dass** von den Bereichen (2, 3, 4) zumindest die aneinanderstoßenden Grenzen dargestellt sind.

3. Verfahren nach Anspruch 1 oder 2, **dadurch gekennzeichnet, dass** die Wiedergabe des Zahnersatzteils (5) in einem Teilbereich (5.1, 5.2, 5.3), der in einem ersten Bereich (2, 3, 4) des Rohlings (1) liegt, abgesetzt gegenüber dem Teilbereich, der in einem zweiten Bereich des Rohlings liegt, dargestellt ist.

4. Verfahren nach einem der Ansprüche 1 bis 3, **dadurch gekennzeichnet, dass** die Lageänderung des Zahnersatzteils (5) begrenzt ist durch die Außenabmessungen des Rohlings (1).

5. Verfahren nach einem der Ansprüche 1 bis 4, **dadurch gekennzeichnet, dass** die Lageänderung des Zahnersatzteils (5) begrenzt ist durch herstellungsbedingte Fertigungsparameter, insbesondere den maximalen Vorschubweg eines Bearbeitungswerkzeugs (18).

6. Verfahren nach einem der Ansprüche 1 bis 5, **dadurch gekennzeichnet, dass** eine Farbmessung im Restaurationsgebiet (12) des herzustellenden Zahnersatzteils (5) durchgeführt wird, indem das Farbprofil der Nachbarzähne einer Präparationsstelle ermittelt wird und dass anhand dieser Farbmessung aus einer Vielzahl unterschiedlicher Rohlinge (1) eine automatische Vorauswahl eines Bereiche unterschiedlicher Farbe aufweisenden Rohlings (1) getroffen wird.

7. Verfahren nach Anspruch 6, **dadurch gekennzeichnet, dass** anhand der Farbmessung automatisch eine Positionierung der Wiedergabe des Zahnersatzteils (5) innerhalb des Bereiche (2, 3, 4) unterschiedlicher Farbe aufweisenden Rohlings (1) erfolgt.

8. Verfahren nach Anspruch 7, **dadurch gekennzeichnet, dass** die Positionierung der Wiedergabe des Zahnersatzteils (5) nachträglich veränderbar ist.

9. Verfahren nach einem der Ansprüche 1 bis 8, **dadurch gekennzeichnet, dass** die mögliche Verschiebung des Zahnersatzteils (5) innerhalb des Rohlings (1) abhängig von der Anordnung der Bereiche (2, 3, 4) innerhalb des Rohlings (1) ist.

10. Verfahren nach einem der Ansprüche 1 bis 9, **dadurch gekennzeichnet, dass** die Eigenschaften der Bereiche (2, 3, 4) ausgewählt sind aus der Farbe, der Festigkeit, der Materialdichte, der Transluzenz oder der Porosität oder einer Kombination mehrerer davon.

11. Verfahren nach einem der Ansprüche 1 bis 10, **dadurch** gezeichnet, dass eine voreingestellte Darstellung im Frontzahnbereich aus labialer Richtung und bei den übrigen Zähnen aus bukkaler Richtung erfolgt.

## Claims

1. A method for producing a machining schedule for a machining device on the basis of CAD/CAM principles for the production of a dental prosthetic item (5) from a blank (1) wherein
- said blank has at least two regions (2, 3, 4) exhibiting different properties,
- said regions (2, 3, 4) are displayed discretely together with a reproduction of said dental prosthetic item (5), and,
- for the purpose of positioning said dental prosthetic item (5) to be carved from said blank within said blank (1) via input means (15), the position of said reproduction of said dental prosthetic item in said blank (1) can be changed with regard to said regions and
- the machining schedule can be modified or compiled to allow for the position of said reproduction of said dental prosthetic item (15),
- **characterized in that** said blank (1) and said dental prosthetic item (5) are displayed in a three-dimensional central perspective, said blank (1) being delimited by its external surfaces and displayed as a semitransparent object.

2. The method as defined in claim 1, **characterized in that** at least the abutting borders of said regions (2, 3, 4) are displayed.

3. The method as defined in claim 1 or claim 2, **characterized in that** said reproduction of said dental prosthetic item (5) is displayed in a subregion (5.1, 5.2, 5.3) situated in a first region (2, 3, 4) of said blank (1) remote from the subregion situated in a second region of said blank.

4. The method as defined in any one of claims 1 to 3, **characterized in that** the change in position of said dental prosthetic item (5) is restricted by the external dimensions of said blank (1).

5. The method as defined in any one of claims 1 to 4, **characterized in that** the change in position of said dental prosthetic item (5) is restricted by production-related parameters, particularly the maximum advance increment of a machining tool (18).

6. The method as defined in any one of claims 1 to 5, **characterized in that** a colorimetric measurement in the restoration site (12) of said dental prosthetic item (5) to be fabricated is carried out by determining the color profile of the adjacent teeth in a preparation site and that automatic preselection of a blank (1) having regions of different colors is carried out from a large number of different blanks (1) with reference to said colorimetric measurement.

7. The method as defined in claim 6, **characterized in that** with reference to said colorimetric measurement positioning of said reproduction of said dental prosthetic item (5) within said blank (1) exhibiting regions (2, 3, 4) of different colors is carried out automatically.

8. The method as defined in claim 7, **characterized in that** the position of said reproduction of said dental prosthetic item (5) can be subsequently modified.

9. The method as defined in any one of claims 1 to 8, **characterized in that** the degree of possible displacement of said dental prosthetic item (5) within said blank (1) is governed by the disposition of said regions (2, 3, 4) within said blank (1).

10. The method as defined in any one of claims 1 to 9, **characterized in that** the properties of said regions (2, 3, 4) are selected from the color, stability, material density, translucency, or porosity, or a combination thereof.

11. The method as defined in any one of claims 1 to 10, **characterized in that** there is provided a preset display in the anterior teeth zone as seen from the labial direction and, for the remaining teeth, from the buccal direction.

## Revendications

1. Procédé de génération d'un schéma d'usinage pour une machine à usiner selon les principes de la CFAO en vue de produire un élément de prothèse dentaire (5) à partir d'une ébauche (1), dans lequel
- l'ébauche présente au moins deux zones (2, 3, 4) ayant des propriétés différentes, dans lequel
- les zones (2, 3, 4) sont représentées en étant décalées les unes par rapport aux autres, en même temps qu'une reproduction de l'élément de prothèse dentaire (5), dans lequel
- en vue d'agencer dans l'ébauche (1) l'élément de prothèse dentaire (5) à élaborer à partir de l'ébauche, des moyens de saisie (15) permettent de modifier la position de la reproduction de l'élément de prothèse dentaire dans l'ébauche (1) par rapport auxdites zones, et dans lequel
- le schéma d'usinage est adapté ou créé en tenant compte de la position de la reproduction de l'élément de prothèse dentaire (5),
- **caractérisé en ce que** l'ébauche (1) et l'élément de prothèse dentaire (5) sont représentés dans une perspective centrale tridimensionnelle, l'ébauche (1) étant représentée en étant limitée par ses surfaces extérieures et en semi-transparence.

2. Procédé selon la revendication 1, **caractérisé en ce qu'**au moins les limites contiguës des zones (2, 3, 4) sont représentées.

3. Procédé selon la revendication 1 ou 2, **caractérisé en ce que** la reproduction de l'élément de prothèse dentaire (5) est représentée dans une zone partielle (5.1, 5.2, 5.3) située dans une première zone (2, 3, 4) de l'ébauche (1) en étant décalée par rapport à la zone partielle située dans une deuxième zone de l'ébauche.

4. Procédé selon l'une quelconque des revendications 1 à 3, **caractérisé en ce que** le changement de position de l'élément de prothèse dentaire (5) est limité par les dimensions extérieures de l'ébauche (1).

5. Procédé selon l'une quelconque des revendications 1 à 4, **caractérisé en ce que** le changement de position de l'élément de prothèse dentaire (5) est limité par des paramètres de fabrication liés à la production, en particulier la course d'avance maximale d'un outil d'usinage (18).

6. Procédé selon l'une quelconque des revendications 1 à 5, **caractérisé en ce qu'**une mesure colorimétrique est effectuée dans la région de restauration (12) de l'élément de prothèse dentaire (5) à produire **en ce que** le profil colorimétrique des dents voisines d'un lieu de préparation est déterminé, et **en ce qu'**à l'aide de cette mesure colorimétrique, une présélection automatique d'une ébauche (1) présentant des zones de différentes couleurs est effectuée parmi une pluralité d'ébauches (1) différentes.

7. Procédé selon la revendication 6, **caractérisé en ce qu'**à l'aide de la mesure colorimétrique, un positionnement de la reproduction de l'élément de prothèse dentaire (5) à l'intérieur de l'ébauche (1) présentant des zones (2, 3, 4) de différentes couleurs est effectué automatiquement.

8. Procédé selon la revendication 7, **caractérisé en ce que** le positionnement de la reproduction de l'élément de prothèse dentaire (5) peut être modifié ultérieurement.

9. Procédé selon l'une quelconque des revendications 1 à 8, **caractérisé en ce que** le décalage éventuel de l'élément de prothèse dentaire (5) à l'intérieur de l'ébauche (1) dépend de l'agencement des zones (2, 3, 4) à l'intérieur de l'ébauche (1).

10. Procédé selon l'une quelconque des revendications 1 à 9, **caractérisé en ce que** les propriétés des zones (2, 3, 4) sont sélectionnées parmi la couleur, la résistance, la densité du matériau, la translucidité ou la porosité ou une combinaison de plusieurs desdites propriétés.

11. Procédé selon l'une quelconque des revendications 1 à 10, **caractérisé en ce qu'**une représentation préréglée s'effectue dans la zone des dents frontales dans une direction labiale et pour les autres dents dans une direction buccale.
